# EUROPEAN PATENT SPECIFICATION

(11) **EP 2 238 747 B1**
(45) Date of publication and mention of the grant of the patent: **10.06.2015**
(21) Application number: 08869462.5
(22) Date of filing: 18.12.2008
(51) Int. Cl.: H04N 5/64, F16M 1/00, H05K 5/00

(54) **A DISPLAY DEVICE**
ANZEIGEVORRICHTUNG
DISPOSITIF D'AFFICHAGE

(30) Priority: 31.12.2007 TR 200709260
(43) Date of publication of application: 13.10.2010
(73) Proprietor: Arçelik Anonim Sirketi, 34445 Istanbul (TR)
(72) Inventor: MERCAN, Zekeriya Burak, 34524 Istanbul (TR); GÜLER, Cemal, 34524 Istanbul (TR); KASAPOGLU, Sevginar, 34524 Istanbul (TR); TEKCE, Hakki Serkan, 34524 Istanbul (TR); ELBAY, Murat Kubilay, 34524 Istanbul (TR)
(86) International application number: PCT/IB2008/055404
(87) International publication number: WO 2009/087518

(56) References cited:
- US-A- 5 455 743
- US-A- 6 144 552
- US-A1- 2006 251 457

## Description

The present invention relates to a display device comprising a panel frame onto which various electronic circuit elements are mounted.

In display devices, either connection members like screws or a support or an additional connection piece that will hold together the elements positioned on the frame are used for mounting the printed circuit boards and other elements on the frame. The connection or support elements used in display devices take up too much space in the devices. Furthermore, each additional support element that is used requires additional labor during assembly of the display devices.

The USA patent document No. US2006221563, in the state of the art, discloses a substrate bracket contained by the casing of the display device used for mounting the printed circuit boards. A second bracket is demountably positioned on the substrate bracket that is mentioned in the application and the printed circuit boards are connected to the said brackets.

The printed circuit board positioned on the panel frame of the display device disclosed in the Japanese patent document No. JP58094284, another application in the state of the art, is secured by a support element.

The objective of the present invention is to realize a display device where electronic elements are mounted to the panel frame without using an additional support element.

In the display device which is realized to fulfill the objective of the present invention and defined in Claim 1 and in its dependent claims, assembly is performed by the structures formed on the recesses and ribs provided on the frame and on the elements to be fastened on the frame. In order to attain the desired alignment accuracy on the frame, the elements to be secured on the frame are secured in a certain order. Elements such as light source, keypad, lens, printed circuit board are secured on the frame.

The frame comprises ribs having various ends. Ends of some of the ribs are recessed so as to form a slot, ends of some have a cylindrical structure while others have a snap structure. There are fin extensions at the lower part of the cylindrical ribs. When an element is disposed on the end of the rib, these fins support the element from the bottom ensuring that it stays at a certain distance from the frame. The frame further comprises at least one recess.

The light source, keypad and lens are mounted to the frame (2) by being fastened to the recesses and ribs.

A hook structure is formed on one side of the light source in order for the light source to be secured to a rib having fins at the edges thereof.

Geometry of two ends of the keypad is changed. At one end of the keypad, a horizontal extension is formed, while on the other end thereof, a vertical snap extension is formed, and a pin is formed at the bottom of the snap protruding horizontally. A hole is provided at the center of the horizontal extension of the keypad.

When the elements are being disposed on the frame, firstly a light source is positioned on the frame. The hook of the light source is engaged to the end of a rib with a fin. The keypad is positioned such that its horizontal extension with a hole fits onto the light source. The other end of the keypad is fastened by means of the pin that protrudes from the side thereof to a rib that comprises a slot on its end. Then a lens is disposed into the recess provided on the frame. The lens is disposed into a recess provided in between a rib, which has a snap at the end thereof so that it can hold both the lens and the printed circuit board at the same time without requiring additional elements, and the keypad. Thus, it is supported by the snap rib on one side and the printed circuit board on the other side. Finally, the printed circuit board is positioned on the ribs and the other elements, whereby the assembly procedure is completed. The printed circuit board is fastened to the recesses and ribs such that it will cover the light source, keypad and lens from the top and prevent displacement thereof. The vertically extending snap of the keypad and the snap ribs of the frame secure the printed circuit board and all of the elements thereunder by preventing them from moving upwards by means of fitting into the holes on the printed circuit board. Movement of the printed circuit board towards the elements at the bottom is prevented by the ribs with fins located thereunder. Since the printed circuit board is fitted on the fins, it is aligned at a certain distance from the frame.

With the inventive display device, assembly is completed by leaving desired distances between the elements and without requiring an additional securing piece whose only function is securing and which will occupy extra space on the frame.

The display device realized to fulfill the objective of the present invention is illustrated in the accompanying figures in which,

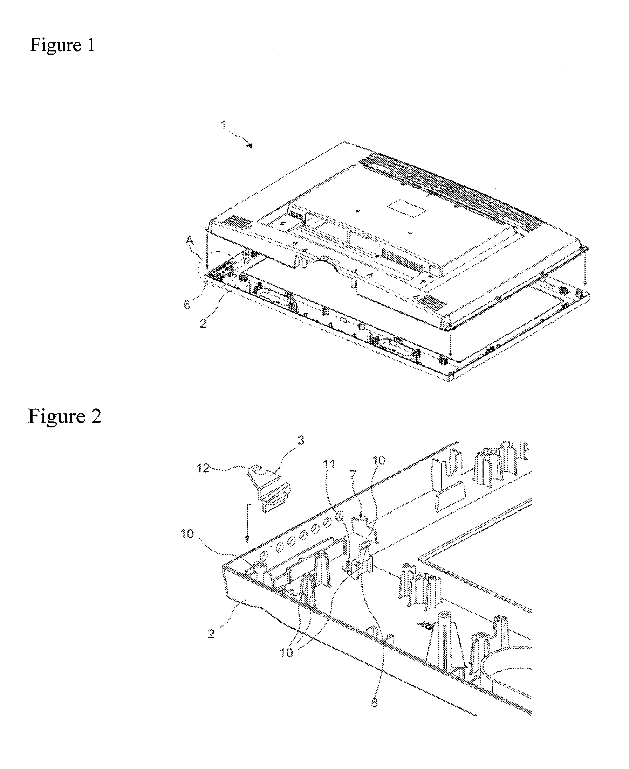

Figure 1 is the schematic view of the inventive display device.
Figure 2 is the view of detail A in Figure 1 when the light source is being disposed.

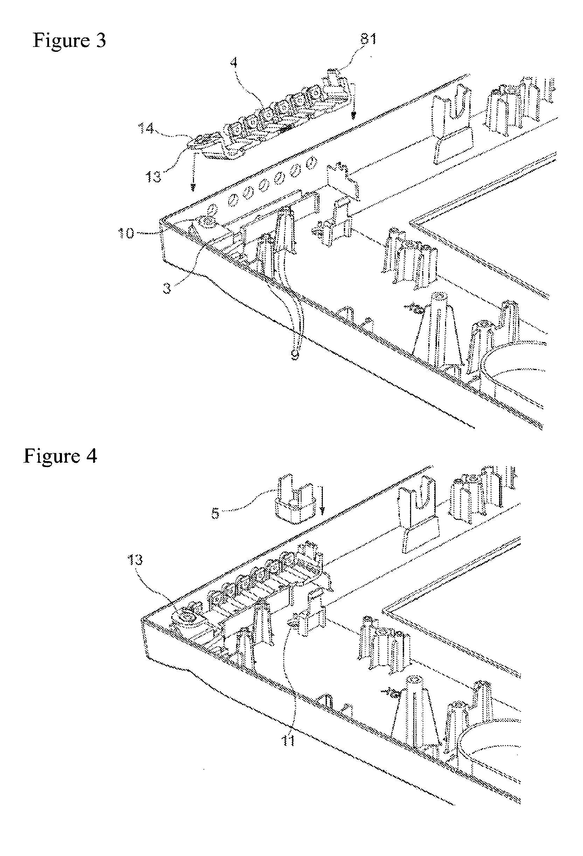

Figure 3 is the view of detail A in Figure 1 when the keypad is being disposed.
Figure 4 is the view of detail A in Figure 1 when the lens is being disposed.

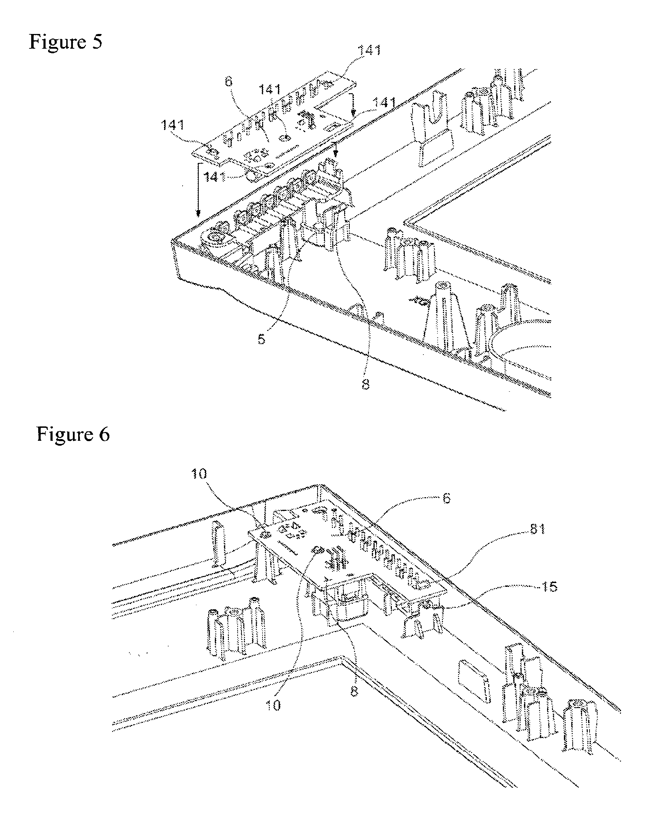

Figure 5 is the view of detail A in Figure 1 when the printed circuit board is being disposed.
Figure 6 is the view of detail A in Figure 1 during assembly procedure.

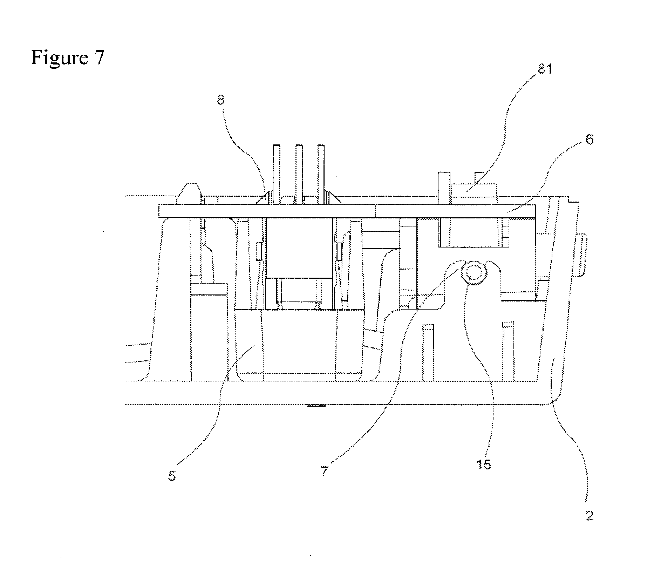

Figure 7 is the front sectional view of the frame after assembly.

The components shown in the figures are numbered as follows:
1. Display device
2. Frame
3. Light source
4. Keypad
5. Lens
6. Printed circuit board
7. Slot
8. 81. Snap
9. Fin
10. Rib
11. Recess
12. Hook
13. Extension
14. 141. Hole
15. Pin

The display device (1) comprises a frame (2) on the center of which a panel is arranged, and at least one light source (3), at least one keypad (4), at least one lens (5) and at least one printed circuit board (6) all of which are positioned on the frame (2).

The frame (2) comprises ribs (10) which have at the ends thereof a slot (7) or a snap (8) or fins (9), and at least one recess (11). Some of the ribs (10) are cylindrical and have fins (9) around them extending outwards. The ends of the ribs (10) having fins (9) maintain their cylindrical form. The fins (9) start from a little lower part of the ends of the ribs (10).

The light source (3), keypad (4) and the lens (5) are mounted to the frame (2) by being fastened to the recesses (11) and ribs (10).

The light source (3) comprises at least one hook (12) for engagement in order to be secured to a rib (10) on which there is a fin (9).

The keypad (4) comprises at one of its sides at least one extension (13) which has a hole (14) on the center thereof and on the other side a snap (81) and a pin (15) under the snap (81). The extension is formed horizontally such that it will be parallel to the frame (2). The snap (81) is formed vertically such that it will extend upwards. The pin (15) forms a horizontal protrusion on the lateral side of the keypad (4).

The printed circuit board (6) comprises holes (141) of various sizes thereon.

When mounting electronic elements on the frame (2), firstly a light source (3) is disposed on the frame (2). The light source (3) is engaged onto the rib (10) with fins (9) such that the hook (12) will partially surround the end of the rib (10) and abut on the fin (9). After the hook (12) is disposed on the fins (9), the end of the rib (10) above the hook (12) remains uncovered. Following the light source (3), the keypad (4) is arranged on the frame (2). The extension (13) of the keypad (4) having a hole (14) in the center thereof is engaged to the end of the rib (10), which is uncovered above the hook (12), by means of the hole (14). The extension (13) completely surrounds the uncovered end of the keypad (4). The pin (15) at the other side of the keypad (4) is fastened to a rib (10) that comprises a slot (7) on its end. Thus, the keypad (4) is secured to the frame (2) from its two ends such that under one of its ends there will be the hook (12) of the light source (3). Then a lens (5) is disposed on the frame (2). There is a cog (not shown in the figures) below the lens (5) and this cog is fitted into the recess (11). The lens (5) is supported on one side by the rib (10) and on the other by the keypad (4). There are provided ribs (10) with fins (9) also on the side of the keypad (4) which is not secured. A printed circuit board (6) is positioned on the keypad (4), lens (5), and ribs (10) with fins (9) and snaps (8). The printed circuit board (6) is fastened to the recesses (11) and ribs (10) such that it will cover the light source (3), keypad (4) and lens (5) from the top and prevent displacement thereof. Ribs (10) fit into the holes (141) on the printed circuit board (6). At this point, while the printed circuit board (6) is fitted onto the fins (9) of the ribs (10) having fins (9), the snap (8) of the rib (10) having a snap (8) is fastened onto the printed circuit board (6) and it holds the circuit (6) from the top. In the meantime, snap (81) of the keypad (4) also fits into a hole (141) on the printed circuit board (6) and holds the circuit (6) from its top part. The fins (9) and snaps (8, 81) support the printed circuit board (6) from top and bottom, thereby preventing the printed circuit board (6) and the other elements connected to the circuit from moving.

The printed circuit board (6) applies pressure on the light source (3), keypad (4) and lens (5) from the top and prevents them from getting displaced.

In the inventive display device (1), by means of the additional structural features formed on the ribs (10) and recesses (11) comprised by the frame (2) and the electronic elements like the light source (3) and the keypad (4), the electronic elements can be secured to each other and to the frame (2) leaving a distance between them as desired, without requiring an additional alignment support.

## Claims

1. A display device (1) comprising a frame (2) on the center of which a panel is arranged and which has ribs (10) and at least one recess (11); at least one light source (3), at least one keypad (4), at least one lens (5); whereby the light source (3), the keypad (4) and the lens (5) are mounted to the frame (2) by being fastened to the recess (11) and ribs (10), and a printed circuit board (6) fastened to the recess (11) and ribs (10) such that the printed circuit board (6) will cover the light source (3), keypad (4) and lens (5) from the top and prevent displacement thereof, **characterized in that** the rib (10) has a first snap (8), wherein said first snap (8) is fastened onto the printed circuit board (6), such that the first snap (8) supports the printed circuit board (6) from the top, and **in that** a second snap (81) of the keypad (4) fits into a hole (141) on the printed circuit board (6) and holds the printed circuit board (6) from its top part.

2. A display device (1) according to Claim 1, **characterized by** a printed circuit board (6) fastened to the rib (10) to which the light source (3) and the keypad (4) are fastened.

3. A display device (1) according to Claim 1 or 2, **characterized by**
- at least one rib (10) having fins (9) that start from a little lower part of the end of the rib (10) and extend outwards,
- at least one rib (10) having a slot (7) at the end thereof,
- a light source (3) having a hook (12),
- a keypad (4) comprising at one of its sides at least one extension (13) having a hole (14) in the center thereof and formed parallel to the frame (2), and on the other side a snap (81) formed vertical to the frame (2), and a pin (15) at its lateral side below the snap (81), protruding parallel to the frame (2).

4. A display device (1) according to any of the preceding claims, **characterized by**
- a light source (3) which is engaged onto the rib (10) with fins (9) such that the hook (12) will partially surround the end of the rib (10) and abut on the fin (9),
- a keypad (4) wherein its extension (13) having a hole (14) in the center thereof is engaged to the end of the rib (10) that is uncovered above the hook (12), and wherein its pin (15) on the other side thereof is fastened to a rib (10) that comprises a slot (7) on its end,
- a lens (5) disposed into the recess (11) provided in between the rib (10) with a snap (8) and the keypad (4),
- a printed circuit board (6) which is positioned on the keypad (4), lens (5), ribs (10) with fins (9) and snaps (8) and supported by the fins (9) and snaps (8, 81) from top and bottom.

## Patentansprüche

1. Anzeigevorrichtung (1), umfassend einen Rahmen (2), in dessen Mitte ein Feld angeordnet ist und der Rippen (10) und wenigstens eine Vertiefung (11) aufweist; wenigstens eine Lichtquelle (3), wenigstens ein Tastenfeld (4), wenigstens eine Linse (5); wobei die Lichtquelle (3), das Tastenfeld (4) und die Linse (5) an dem Rahmen (2) angebracht sind, indem sie an der Vertiefung (11) und den Rippen (10) befestigt sind, und eine gedruckte Leiterplatte (6), die an der Vertiefung (11) und den Rippen (10) befestigt ist, derart, dass die gedruckte Leiterplatte (6) die Lichtquelle (3), das Tastenfeld (4) und die Linse (5) von oben abdeckt und deren Verlagerung verhindert, **dadurch gekennzeichnet, dass** die Rippe (10) ein erstes Sicherungselement (8) aufweist, wobei das erste Sicherungselement (8) an der gedruckten Leiterplatte (6) befestigt ist, derart, dass das erste Sicherungselement (8) die gedruckte Leiterplatte (6) von oben stützt, und **dadurch, dass** ein zweites Sicherungselement (81) des Tastenfelds (4) in eine Öffnung (141) an der gedruckten Leiterplatte (6) gesetzt ist und die gedruckte Leiterplatte (6) an ihrem oberen Teil hält.

2. Anzeigevorrichtung (1) nach Anspruch 1, **gekennzeichnet durch** eine gedruckte Leiterplatte (6), die an der Rippe (10) befestigt ist, an der die Lichtquelle (3) und das Tastenfeld (4) befestigt sind.

3. Anzeigevorrichtung (1) nach Anspruch 1 oder 2, **gekennzeichnet durch**
- wenigstens eine Rippe (10) mit Lamellen (9), die von einem kleinen unteren Teil des Endes der Rippe (10) ausgehen und sich nach außen erstrecken,
- wenigstens eine Rippe (10) mit einem Schlitz (7) an ihrem Ende,
- eine Lichtquelle (3) mit einem Haken (12),
- ein Tastenfeld (4), umfassend an einer seiner Seiten wenigstens eine Verlängerung (13) mit einer Öffnung (14) in ihrer Mitte, die parallel zum Rahmen (2) gebildet ist, und an seiner anderen Seite ein Sicherungselement (81), das vertikal zu Rahmen (2) gebildet ist, und einen Stift (15) an seiner lateralen Seite unter dem Sicherungselement (81), der parallel zum Rahmen (2) vorspringt.

4. Anzeigevorrichtung (1) nach einem der vorangehenden Ansprüche, **gekennzeichnet durch**
- eine Lichtquelle (3), die an der Rippe (10) mit Lamellen (9) in Eingriff steht, derart, dass der Haken (12) das Ende der Rippe (10) teilweise umgibt und an der Lamelle (9) anliegt,
- ein Tastenfeld (4), dessen Verlängerung (13) mit einer Öffnung (14) in ihrer Mitte mit dem Ende der Rippe (10) in Eingriff steht, das über dem Haken (12) unbedeckt ist, und wobei sein Stift (15) an seiner anderen Seite an einer Rippe (10) befestigt ist, die an ihrem Ende einen Schlitz (7) umfasst,
- eine Linse (5), die in der Vertiefung (11) angeordnet ist, die zwischen der Rippe (10) mit einem Sicherungselement (8) und dem Tastenfeld (4) vorgesehen ist,
- eine gedruckte Leiterplatte (6), die an dem Tastenfeld (4), der Linse (5), den Rippen (10) mit Lamellen (9) und Sicherungselementen (8) angeordnet ist und von den Lamellen (9) und Sicherungselementen (8, 81) von oben und unten abgestützt wird.

## Revendications

1. Un dispositif d'affichage (1) comprenant un cadre (2) sur le centre duquel un panneau est arrangé et qui présente des nervures (10) et au moins un évidement (11) ; au moins une source de lumière (3), au moins un clavier numérique (4), au moins un objectif (5) ; où la source de lumière (3), le clavier numérique (4) et l'objectif (5) sont montés au cadre (2) en étant fixés à l'évidement (11) et aux nervures (10), et un circuit imprimé (6) qui est fixé à l'évidement (11) et aux nervures (10) de telle sorte que le circuit imprimé (6) couvre la source de lumière (3), le clavier numérique (4) et l'objectif (5) par le haut et empêche le déplacement de ceux-ci, **caractérisé en ce que** la nervure (10) présente un premier élément d'encliquetage (8), où ledit élément d'encliquetage (8) est fixé sur le circuit imprimé (6), de telle sorte que le premier élément d'encliquetage (8) supporte le circuit imprimé (6) par le haut, **en ce que** un deuxième élément d'encliquetage (81) du clavier numérique (4) rentre dans un trou (141) sur le circuit imprimé (6) et tient le circuit imprimé (6) à partir de sa partie supérieure.

2. Un dispositif d'affichage (1) selon la Revendication 1, **caractérisé par** un circuit imprimé (6) qui est fixé à la nervure (10) à laquelle la source de lumière (3) et le clavier numérique (4) sont fixés.

3. Un dispositif d'affichage (1) selon la Revendication 1 ou 2, **caractérisé par**
- au moins une nervure (10) qui présente des ailettes (9) qui commencent à partir d'une partie inférieure de l'extrémité de la nervure (10) et s'étend vers l'extérieur,
- au moins une nervure (10) qui présente une fente (7) à son extrémité,
- une source de lumière (3) qui présente un crochet (12) et
- un clavier numérique (4) qui comprend dans au moins un de ses côtés au moins une extension (13) présentant un trou (14) dans son centre et formé parallèlement au cadre (2), et à l'autre côté un élément d'encliquetage (81) formé verticalement au cadre (2), et une goupille (15) à son côté latéral au-dessous de l'élément d'encliquetage (81), faisant saillie parallèlement au cadre (2).

4. Un dispositif d'affichage (1) selon l'une quelconque des revendications précédentes, **caractérisé par**
- une source de lumière (3) qui en prise sur la nervure (10) avec de ailettes (9) de telle sorte que le crochet (12) entoure partiellement l'extrémité de la nervure (10) et s'appuie sur l'ailette (9),
- un clavier numérique (4) où son extension (13) présentant un trou (14) dans son centre est engagée à l'extrémité de la nervure (10) qui n'est pas couverte au-dessus du crochet (12), et où sa goupille (15) sur son autre côté est fixée à une nervure (10) qui comprend une fente (7) sur son extrémité,
- un objectif (5) qui est dispose dans l'évidement (11) arrange entre la nervure (10) avec un élément d'encliquetage (8) et le clavier numérique (4) et
- un circuit imprimé (6) qui est positionné sur le clavier numérique (4), l'objectif (5), les nervures (10) avec les ailettes (9) et les éléments d'encliquetage (8) et supporté par les ailettes (9) et les éléments d'encliquetage (8, 81) par le haut et par le bas.
